# EUROPÄISCHE PATENTSCHRIFT

(11) **EP 1 955 799 B1**
(45) Veröffentlichungstag und Bekanntmachung des Hinweises auf die Patenterteilung: **12.08.2009**
(21) Anmeldenummer: 08000725.5
(22) Anmeldetag: 16.01.2008
(51) Int. Cl.: B23D 31/00, F16C 9/04

(54) **Verfahren zur Ausbildung einer Anrissstelle zum Bruchtrennen eines Bauteils aus einem Kohlenstoffstahl**
Method for forming a crack for fracture-separating a component made from a carbon steel alloy
Procédé de formation d'un emplacement de fissure pour la division par rupture d'un composant en acier au carbone

(30) Priorität: 08.02.2007 DE 102007006338
(43) Veröffentlichungstag der Anmeldung: 13.08.2008
(73) Patentinhaber: Bayerische Motoren Werke Aktiengesellschaft, 80809 München (DE)
(72) Erfinder: Luchner, Clemens, 83236 Übersee (DE); Bonauer, Franz, 85716 Unterschleissheim (DE); Betzmeier, Christian, 82544 Egling (DE); Kreil, Franz, 85652 Pliening (DE)

(56) Entgegenhaltungen:
- EP-A- 1 034 868
- WO-A-97/22430
- US-A- 3 818 577

## Beschreibung

Die Erfindung betrifft ein Verfahren zur Ausbildung einer Anrissstelle zum Bruchtrennen eines Bauteils mit wenigstens einer durch die Bruchtrennebene gehenden Schraubenbohrung aus einem Kohlenstoffstahl mit einem Kohlenstoffgehalt C ≤ 0,5 Gew.-% (Massenanteil in %) entlang einer Bruchtrennebene, wobei zur gezielten Bruchauslösung eine Anrissstelle mittels Strahlenergie erzeugt wird, zumindest abschnittsweise entlang einer Seite der Bruchtrennebene von der Bauteiloberfläche aus durch Stege voneinander getrennte, trichterförmig sacklochartige Vertiefungen erzeugt werden, durch Verschneiden benachbarter Vertiefungen oberflächennahe Steg-Spitzen zur Ausbildung von Härterissen als zum Bruchtrennen dienende Starterrisse erzielt werden.

Aus der WO 97/22430 A1 ist ein derartiges Verfahren bekannt, wonach bei einem Bauteil, z.B. einem Pleuel, aus einem Kohlenstoffstahl mittels Laser-Bohren bzw. Laser-Perforieren die Randzone jeder sacklochartigen Vertiefung aufgeschmolzen wird und diese Randzonen insbesondere in den sich überschneidenden Bereichen in den Steg-Spitzen durch Wärmeabfluss in das umgebende Material sowie gegebenenfalls durch das Aus- bzw. Anblasen mit Luft und/oder Sauerstoff rasch abkühlen, wobei das Gefüge des verwendeten Kohlenstoffstahls mit C ca. 0,5-0,85% zu Martensit umgewandelt wird.

Diese Gefügeumwandlung zumindest in den Steg-Spitzen zu Martensit ergibt eine hohe Versprödung über deren gesamten Querschnitt mit der Folge, dass aufgrund der hohen Härtespannungen in den Steg-Spitzen selbsttätig sich Härterisse ausbilden, die bei einer gezielten Brucheinleitung in das Bauteil als Starterrisse dienen, von denen die Brucheinleitung zum Abtrennen eines Bauteil-Abschnittes ausgeht.

Das Verfahren der WO 97/22430 A1 ist allerdings für Kohlenstoffstähle mit einem Kohlenstoffgehalt C ≤ 0,5% wenig geeignet, weshalb mit der EP 1 034 868 A1 vorgeschlagen wurde, bei einem derartigen Kohlenstoffstahl das Bauteil zunächst im Bereich der Anrissstelle oberflächenzuhärten und anschließend mittels Stahlenergie die trichterförmigen Vertiefungen zu erzeugen.

Das Verfahren gemäß der EP 1 034 868 A1 ist äußerst vorteilhaft zur Herstellung eines mechanischen Steuerrings, der bei einer Hubkolbenmaschine im Kurbelwellen-Triebwerk als ein drehbar angeordneter Exzenter einer Hubveränderung für ein änderbares Verdichtungsverhältnis (ε) dient. Soweit die einzelnen Komponenten des bruchgetrennten Bauteils jedoch mittels Schrauben miteinander verbunden werden sollen, wie es insbesondere Pleueln oder Kurbelwellenlagern von Kraftfahrzeug-Brennkraftmaschinen der Fall ist, entstehen jedoch im nicht aufgekohlten Bruchquerschnitt um die Schraubendurchgangsbohrungen herum Scherlippen, welche dazu führen, dass die Lageranordnung nicht mehr ordnungsgemäß zusammengefügt werden kann.

Aufgabe der Erfindung ist es daher, ein eingangs genanntes Verfahren bereit zu stellen, mit dem bei einem Bauteil mit wenigstens einer durch die Bruchtrennebene gehenden Schraubenbohrung aus einem Kohlenstoffstahl mit einem Kohlenstoffgehalt C ≤ 0,5% entlang einer Bruchtrennebene eine Anrissstelle zum Bruchtrennen des Bauteils ausgebildet werden kann, ohne dass in einem nicht aufgekohlten Bereich der Bruchtrennebene plastische Verformungen auftreten, die ein ordnungsgemäßes Zusammenfügen der einzelnen Komponenten des bruchgetrennten Bauteils verhindern.

Die Lösung der Aufgabe erfolgt mit einem Verfahren mit den Merkmalen des Anspruchs 1, wobei zunächst das Bauteil sowie dessen Schraubenbohrung, dann das Bauteil mindestens im Bereich der Anrissstelle oberflächengehärtet wird und anschließend die Vertiefungen (Laserkerben) erzeugt werden. Dadurch ist eine Oberflächenhärtung auch der Schraubenbohrungsoberfläche möglich, sodass einer Entstehung von Scherlippen wirksam entgegengewirkt wird und die einzelnen Komponenten des bruchgetrennten Bauteils problemlos und ordnungsgemäß wieder zusammengefügt werden können.

Besonders bevorzugte Weiterbildungen des erfindungsgemäßen Verfahrens sind Gegenstand der Unteransprüche.

Sehr vorteilhaft ist es, wenn das Bauteil einsatzgehärtet wird, wobei das Einsatzhärten die Schritte Aufkohlen, Abkühlen, Härten und Anlassen umfasst und die Vorbearbeitung vor dem Aufkohlen erfolgt.

Zweckmäßigerweise umfasst die Vorbearbeitung der Schraubenbohrung die Bearbeitung einer Durchgangsbohrung oder einer Kernbohrung und ggf. eines Gewindes. Vorzugsweise überschreitet beim Härten der Restaustenitanteil 30% nicht. Vorteilhaft wird so ein "zähes" Bruchtrennverhalten und damit Ausbrüche, Doppelrisse, Stufen oder Ähnliches, vermieden und die reproduzierbare Fügequalität der einzelnen Komponenten des bruchgetrennten Bauteils gewährleistet.

Gemäß eines besonders vorteilhaften Ausführungsbeispiels der Erfindung weisen die Vertiefungen bei einer Einhärtetiefe von ca. 0,2 bis 1,2 mm jeweils eine Tiefe zwischen 0,2 bis 0,9 mm auf. Mit dieser Ausgestaltung werden also Laserperforationen innerhalb der Einhärtetiefe als auch die Einhärtetiefe überschreitende Vertiefungen erzielt, je nachdem, ob die Starterrisse lediglich in den Steg-Spitzen durch Härterisse ausgebildet werden sollen oder ob die Starterrisse über die gesamte Höhe der Stege durch Härterisse erzeugt werden sollen.

Bevorzugt findet das erfindungsgemäße Verfahren Anwendung bei einem Pleuel oder einem Kurbelwellenlager einer Brennkraftmaschine, da die einzelnen Komponenten dieser Bauteile üblicherweise mittels Schrauben verbunden werden.

Nachfolgend sind unter Bezugnahme auf Figuren besonders bevorzugte Weiterbildungen des erfindungsgemäßen Verfahren näher erläutert, dabei zeigen schematisch und beispielhaft
- Figur 1: ein Pleuel mit einer durch eine Bruchtrennebene gehenden Schraubenbohrung aus einem Kohlenstoffstahl mit einem Kohlenstoffgehalt C ≤ 0,5%,
- Figur 2: einen Schnitt im Bereich einer Senkung in der Pleuelseitenfläche durch ein Pleuel mit einer durch eine Bruchtrennebene gehenden Schraubenbohrung aus einem Kohlenstoffstahl mit einem Kohlenstoffgehalt C ≤ 0,5% und
- Figur 3: einen Schnitt im Bereich einer Schraubendurchgangsbohrung durch ein Pleuel mit einer durch eine Bruchtrennebene gehenden Schraubenbohrung aus einem Kohlenstoffstahl mit einem Kohlenstoffgehalt C ≤ 0,5%.

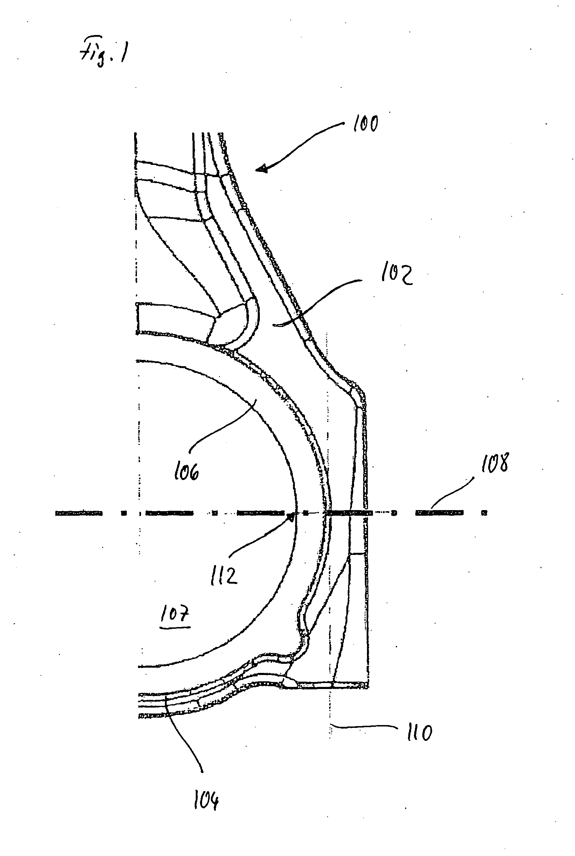

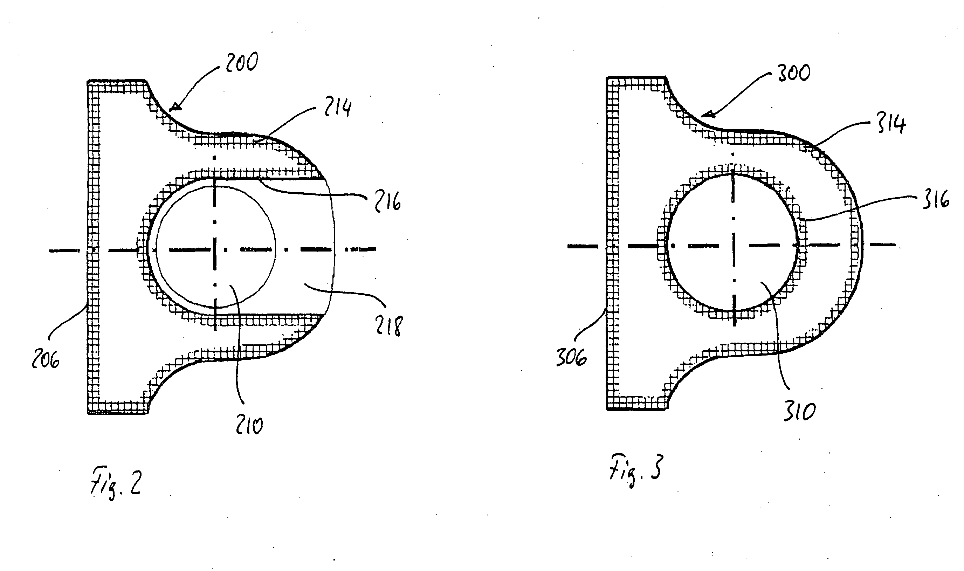

Das in der Figur 1 gezeigte Pleuel 100 ist aus einem Kohlenstoffstahl mit einem Kohlenstoffgehalt C ≤ 0,5 %, vorzugsweise ≤ 0,35 % gebildet. Schnittansichten im Bereich einer Senkung 218 in der Pleuelseitenfläche und im Bereich einer Schraubendurchgangsbohrung 310 durch das Pleuel 200, 300 sind in den Figuren 2 und 3 dargestellt.

Das Pleuel 100 umfasst einen Pleuel-Fußbereich 102 mit einem großen Lagerauge 107 zur Aufnahme eines Hubzapfens einer hier nicht näher dargestellten Brennkraftmaschine eines Kraftfahrzeugs. Innenseitig weist das Lagerauge 107 eine Lagerfläche 106 auf, die entweder durch einen gesonderten Lagereinsatz oder durch das Pleuel 100 selbst gebildet ist. Falls die Lagerfläche 106 durch das Pleuel 100 selbst gebildet ist, ist zweckmäßigerweise eine besondere Oberflächenbehandlung und/oder - beschichtung der Lagerfläche 106 vorgesehen, beispielsweise eine Induktionshärtung. Das Pleuel 100 ist entlang einer hier mit 108 bezeichneten Trennebene bruchgetrennt, sodass zu Montagezwecken ein Lagerdeckel 104 vom Pleuelfuß 102 trennbar ist. Pleuelfuß 102 und Lagerdeckel 104 sind mittels Schrauben, deren Mittellinie hier mit 110 bezeichnet ist, miteinander verspannbar.

Ausgangspunkt für das Bruchtrennen ist das aus der WO 97/22430 A1 bekannte Verfahren zur Ausbildung einer Anrissstelle 112 zum Bruchtrennen eines Bauteils aus einem Kohlenstoffstahl, bei dem zur gezielten Bruchauslösung eine Anrissstelle 112 mittels Strahlenergie, z.B. Laserstrahl oder Elektronenstrahl, erzeugt wird, wobei zumindest abschnittsweise entlang einer Seite der Bruchtrennebene 108 von der Bauteiloberfläche aus durch Stege voneinander getrennte, trichterförmig sacklochartige Vertiefungen durch Schmelzen, Verdampfen und/oder Ausblasen erzeugt werden, und durch Verschneidung benachbarter, trichterförmiger Vertiefungen oberflächennahe Steg-Spitzen mit durch Eigenabschreckung jeweils glashart versprödetem Querschnitt zur Ausbildung von Härterissen als zum Bruchtrennen dienender Starterrisse erzielt werden. Diesbezüglich wird auf die WO 97/22430 A1 Bezug genommen, deren Inhalt insbesondere hinsichtlich der Verfahrensschritte und Merkmale zur Ausbildung der Anrissstelle zum Bruchtrennen hiermit in diese Anmeldung aufgenommen wird.

Zur Anwendung dieses Verfahrens bei den Pleueln 100, 200, 300 mit einem Kohlenstoffstahl C ≤ 0,5 % zur glasharten Versprödung zumindest der Steg-Spitzen wird erfindungsgemäß vorgeschlagen, das Pleuel 100, 200, 300 zusammen mit seinen Schraubenbohrungen 110, 210, 310 zunächst vorzubearbeiten, das Pleuel 100, 200, 300 dann mindestens im Bereich der Anrissstelle 112 oberflächenzuhärten und anschließend die Vertiefungen zu erzeugen.

Als besonders vorteilhafte Vorgehensweise hat sich in Versuchen ergeben, dass das Bauteil bzw. das jeweilige Pleuel 100, 200, 300 zunächst zusammen mit seinen Schraubenbohrung 110, 210, 310 vorbearbeitet wird einschließlich Planschleifen, Vorbearbeitung des kleinen Lagerauges (hier nicht gezeigt) und des großen Lagerauges 107 sowie einer Sacklockbohrung 310 und/oder einer seitlichen Senkung 218. Dann erfolgt das Aufkohlen des Bauteils 100, 200, 300 gefolgt von einer Zwischenbearbeitung, wie Bearbeitung von Schraubenbohrungen und Ölbohrung. Nachfolgend erfolgt das Härten.

Anschließend werden die trichterförmigen Vertiefungen der 112 mittels Laser eingebracht. Hierbei können bei einer bevorzugten Einhärtetiefe von ca. 0,2 bis 1,5 mm die lasergebohrten Vertiefungen jeweils eine Tiefe zwischen 0,4 bis 0,9 mm aufweisen. Damit ergibt sich bei entsprechender Kombination von Einhärtetiefe und Tiefe der jeweiligen lasergebohrten Vertiefung eine Gestaltung, bei der die Vertiefung über die gesamte Tiefe oberflächenversprödet ist bis in die Steg-Spitzen oder aber mindestens sind die Steg-Spitzen glashart versprödet. Die vorgenannte Zuordnung von Einhärtetiefe und Tiefe der lasergebohrten Vertiefungen richtet sich unter anderem wesentlich nach den zu brechenden Querschnitten.

Im weiteren wird vorgeschlagen, dass das jeweilige, aus einem Einsatzstahl mit C <0,35 bestehende Pleuel 100, 200, 300 nach einer spanabhebenden Vorbearbeitung einschließlich zusätzlicher Gestaltungen, wie beispielsweise Schraubenbohrung 110, 210, 310, allseitig 0,2 bis 0,4 mm tief einsatzgehärtet ist, dass anschließend im Lagerauge 107 des Pleuels 100, 200, 300 diametral angeordnete Anrissstellen 112 mittels gepulstem Laser gebohrt und die Steg-Spitzen durch Eigenabschreckung durch das umgebende Material glashart versprödet sind, ferner dass sich dann an die Fertigbearbeitung unter maßlicher Vorhaltung für bleibende Bruchtrenn-Verformungen ein einstufiges Bruchtrennen des Pleuels 100, 200, 300 anschließt. Im Übrigen sind die Steg-Spitzen derart vertieft, dass sie von der Endbearbeitung nicht erfasst sind. Dies gilt für gleitgelagerte Pleuel. Bei wälzgelagerten Pleueln werden die Stegspitzen bearbeitet, vorzugsweise wird bei Bearbeitung die komplette Lagerkerbe entfernt, wodurch sich die Legensdauer erhöht.

Weiter wird für das Pleuel 100, 200, 300 vorgeschlagen, dass jedes mit einer inneren Lagerfläche versehenes, bruchgetrenntes Pleuel 100, 200, 300 werkstoffabhängig Bruchtrennflächen mit einer vorgegebenen Mindestrauhigkeit aufweist, und dass nach dem Bruchtrennen die jeweiligen bruchgetrennten Pleuelteile 102, 104 zum Setzen der Bruchstruktur wieder zusammengesetzt und gegeneinander gepreßt sind. Damit sind die Bruchtrennflächen stabilisiert. Mit der weiter vorgegebenen Mindestrauhigkeit der Bruchtrennflächen soll sichergestellt sein, dass eine im Lagerauge 107 aufgenommene Lagerschale ausreichend fest sitzt bzw. - falls eine Lagerfläche durch das Pleuel 100 selbst gebildet ist - diese ein vorbestimmtes Lagerspiel zum Hubzapfen aufweist oder Wälzlagersegmente störungsfrei die Bruchtrennfuge überrollen.

Das Bauteil 100, 200, 300 wird Bruchgetrennt, die Pleuelteile 102, 104 wieder zusammengefügt und verschraubt. Abschließend erfolgt die Fertigbearbeitung umfassend Hartdrehen des großen Lagerauges 107, einpressen eine Lagerbuchse in das kleine Lagerauge, Planschleifen, Feinspindeln des kleinen Lagerauges sowie Honen des kleinen und des großen Lagerauges 107.

## Patentansprüche

1. Verfahren zur Ausbildung einer Anrissstelle (112) zum Bruchtrennen eines Bauteils (100, 200, 300) mit wenigstens einer durch die Bruchtrennebene (108) gehenden Schraubenbohrung (110, 210, 310) aus einem Kohlenstoffstahl mit einem Kohlenstoffgehalt C ≤ 0,5 % entlang der Bruchtrennebene, wobei
- zur gezielten Bruchauslösung eine Anrissstelle (112) mittels Strahlenergie erzeugt wird,
- zumindest abschnittsweise entlang einer Seite der Bruchtrennebene (108) von der Bauteiloberfläche aus durch Stege voneinander getrennte, trichterförmig sacklochartige Vertiefungen erzeugt werden,
- durch Verschneiden benachbarter Vertiefungen oberflächennahe Steg-Spitzen zur Ausbildung von Härterissen als zum Bruchtrennen dienende Starterrisse erzielt werden,
**dadurch gekennzeichnet, dass**
- das Bauteil (100, 200, 300) sowie dessen Schraubenbohrung (110, 210, 310) zunächst vorbearbeitet,
- dann das Bauteil (100, 200, 300) mindestens im Bereich der Anrissstelle oberflächengehärtet wird und
- anschließend die Vertiefungen erzeugt werden.

2. Verfahren nach Anspruch 1, **dadurch gekennzeichnet, dass** das Bauteil (100, 200, 300) einsatzgehärtet wird, umfassend die Schritte Aufkohlen, Abkühlen, Härten und Anlassen, wobei die Vorbearbeitung vor dem Aufkohlen erfolgt.

3. Verfahren nach einem der Ansprüche 1-2, **dadurch gekennzeichnet, dass** die Vorbearbeitung der Schraubenbohrung (110, 210, 310) die Bearbeitung einer Kernbohrung und ggf. eines Gewindes umfasst.

4. Verfahren nach einem der Ansprüche 1-3, **dadurch gekennzeichnet, dass** beim Härten der Restaustenitanteil 30 % nicht überschreitet.

5. Verfahren nach einem der Ansprüche 1-4, **dadurch gekennzeichnet, dass** bei einer Einhärtetiefe von ca. 0,2 bis 1,5 mm die Vertiefungen jeweils eine Tiefe zwischen 0,2 bis 0,9 mm aufweisen.

6. Verfahren nach einem oder mehreren der Ansprüche 1-5, **gekennzeichnet durch** die Anwendung bei einem Pleuel oder einem Kurbelwellenlager einer Brennkraftmaschine.

## Claims

1. A method of forming an incipient crack (112) for breaking off a component (100, 200, 300) by fracturing, via at least one screw bore (110, 210, 310) through the fracture plane (108) in a carbon steel with a carbon content C ≤ 0.5 % along the fracture plane, wherein
- radiant energy is used for controlled triggering of the fracture at an incipient crack (112),
- crater-like recesses in the form of blind bores are formed along at least parts of one side of the fracture plane (108), starting from the surface and separated by webs, and
- neighbouring recesses are clipped to form web peaks near the surface in order to produce hardening cracks and starter cracks of use during fracturing,
**characterised in that**
- the component (100, 200, 300) and the screw bore (110, 210, 310) therein are initially pre-processed,
- the component (100, 200, 300), is then surface-hardened at least in the region of the incipient crack, and
- the recesses are then produced.

2. A method according to claim 1, **characterised in that** the component (100, 200, 300) is case-hardened, comprising the steps of carburisation, cooling, hardening and annealing, wherein the pre-processing occurs before carburisation.

3. A method according to claim 1 or claim 2, **characterised in that** the pre-processing of the screw boring (110, 210, 310) includes the production of a core bore and of a screwthread if required.

4. A method according to any of claims 1 to 3, **characterised in that** the residual austenite content during hardening does not exceed 30%.

5. A method according to any of claims 1 to 4, **characterised in that** when the case-hardening depth is about 0.2 to 1.5 mm the recesses have a depth between 0.2 and 0.9 mm.

6. A method according to one or more of claims 1 to 5, **characterised by** application to a connecting rod or crankshaft bearing of an internal combustion engine.

## Revendications

1. Procédé de formation d'un point d'amorce de rupture (112) pour la division par rupture d'un composant (100, 200, 300) ayant au moins un taraudage (110, 210, 310) traversant le plan de rupture (108), le composant étant réalisé en un acier au carbone ayant une teneur en carbone C ≤ 0,5 % le long du plan de rupture, et
- pour déclencher une rupture ciblée, on réalise un point d'amorce de rupture (112) par de l'énergie de rayonnement,
- au moins par segment, le long d'un côté du plan de séparation par rupture (108) à partir de la surface supérieure du composant, on réalise des cavités en trou borgne, en forme d'entonnoir, séparées les unes des autres par des entretoises,
- en coupant les cavités voisines, on réalise des points d'entretoise proches de la surface supérieure pour développer des fissures de traitement thermique constituant des amorces de fissure servant à la division par rupture,
**caractérisé en ce que**
- le composant (100, 200, 300) et son taraudage (110, 210, 310) sont tout d'abord pré-usinés,
- puis, on effectue un traitement thermique de surface du composant (100, 200, 300) au moins dans la zone du point d'amorce de rupture, et
- ensuite, on réalise les cavités.

2. Procédé selon la revendication 1,
**caractérisé en ce qu'**
on effectue la cémentation du composant (100, 200, 300) comprenant les étapes de carburation, de refroidissement, de trempe et de recuit, l'usinage préalable étant effectué avant la carburation.

3. Procédé selon les revendications 1 et 2,
**caractérisé en ce que**
l'usinage préalable des taraudages (110, 210, 310) comprend l'usinage d'un perçage de base et le cas échéant d'un taraudage.

4. Procédé selon les revendications 1 à 3,
**caractérisé en ce que**
lors de la trempe, on ne dépasse pas la teneur de 30 % en austénite résiduelle.

5. Procédé selon les revendications 1 à 4,
**caractérisé en ce que**
la profondeur de trempe représente entre environ 0,2 mm à 1,5 mm et les cavités ont chacune une profondeur comprise entre 0,2 mm et 0,9 mm.

6. Procédé selon les revendications 1 à 5,
**caractérisé en ce qu'**
il est appliqué à une bielle ou au palier de vilebrequin d'un moteur à combustion interne.
